# EUROPÄISCHE PATENTANMELDUNG

(11) **EP 1 261 172 A2**
(43) Veröffentlichungstag der Anmeldung: **27.11.2002**
(21) Anmeldenummer: 02360144.6
(22) Anmeldetag: 06.05.2002
(51) Int. Cl.: H04L 12/28

(54) **Verfahren zur Auswahl eines von mindestens zwei Endgeräten**

(30) Priorität: 23.05.2001 DE 10125284
(71) Anmelder: ALCATEL, 75008 Paris (FR)
(72) Erfinder: Klein, Siegfried, 70469 Stuttgart (DE); Bakker, Hajo, 71735 Eberdingen (DE)
(74) Vertreter: Rausch, Gabriele, Dr.

(57) **Zusammenfassung**

Durch eine erfindungsgemäße automatische, direkte Punkt-zu-Punkt Kommunikation (N2), z.B. mittels Bluetooth, stellen zwei Endgeräte (T1, T2) ohne Mitwirkung einer Zentrale fest, welches der Endgeräte (T1, T2) bevorzugt mit einem Übertragungsnetz (N1) kommunizieren soll und registrieren nur eines der beiden Endgeräte (T1, T2) im Übertragungsnetz (N1). Die Endgeräte (T1, T2) identifizieren sich dazu gegenseitig als Endgeräte, die einem Pool von Endgeräten eines Teilnehmers angehören und haben beispielsweise neben der Liste der Endgeräte des Pools auch eine Rangfolge gespeichert. Die Rangfolge kommt einer Prioritätsvergabe gleich. Befinden sich zwei Endgeräte (T1, T2) in einem Bluetooth-Netz (N2), so identifizieren sie sich gegenseitig. Stellt ein Endgerät (T2) fest, dass die dem anderen Endgerät zugeordnete Priorität niedriger als die eigene ist, dann meldet es sich in einem ihm zugeordneten Übertragungsnetz (N1) durch Registrierung an oder bleibt registriert sofern es dies schon war. Stellt ein Endgerät (T1) fest, dass die dem anderen Endgerät (T2) zugeordnete Priorität höher als die eigene ist, dann meldet es sich in einem ihm zugeordneten Übertragungsnetz (N1) ab, sofern es durch Registrierung angemeldet war.

## Beschreibung

Die Erfindung betrifft ein Verfahren zur Auswahl eines von mindestens zwei Endgeräten.

Aus WO95/34985 ist ein Verfahren zur Auswahl eines von mindestens zwei Fernmeldeendgeräten bekannt. Ein Server eines Diensteanbieters verwaltet verschiedene, registrierte Endgeräte eines Teilnehmers und leitet Anrufe automatisch an das Endgerät weiter, welches sich in nächster Nähe zum Teilnehmer befindet. Die Identifikation des nächsten Endgerätes erfolgt durch einen Teilnehmeridentifikationsausweis, der vom Teilnehmer stets mitgeführt werden muss und der räumlich begrenzt fernabfragbar ist. Identifiziert ein Endgerät den Teilnehmeridentifikationsausweis, so meldet es dies der Zentrale, die dann Gespräche an dieses Endgerät weiterleitet. Nachteilig wirkt sich aus, dass ein zentraler Server notwendig ist und stets der Teilnehmeridentifikationsausweis mitgeführt werden muss.

Aufgabe der Erfindung ist es, eine technisch weniger aufwendiges Verfahren zur Auswahl eines von mindestens zwei Endgeräten anzugeben.

Gelöst wird diese Aufgabe durch ein Verfahren nach Anspruch 1, ein System nach Anspruch 3, ein Endgerät nach Anspruch 4 und ein Endgerät nach Anspruch 5.

Durch eine automatische, direkte Punkt-zu-Punkt Kommunikation, z.B. mittels Bluetooth, stellen zwei Endgeräte ohne Mitwirkung einer Zentrale fest, welches der Endgeräte bevorzugt mit einem Übertragungsnetz kommunizieren soll und registrieren nur eines der beiden Endgeräte im Übertragungsnetz. Die Endgeräte identifizieren sich dazu gegenseitig als Endgeräte, die einem Pool von Endgeräten eines Teilnehmers angehören und haben beispielsweise neben der Liste der Endgeräte des Pools auch eine Rangfolge gespeichert. Die Rangfolge kommt einer Prioritätsvergabe gleich. Befinden sich zwei Endgeräte in einem Bluetooth-Netz, so identifizieren sie sich gegenseitig. Stellt ein Endgerät fest, dass die dem anderen Endgerät zugeordnete Priorität niedriger als die eigene ist, dann meldet es sich in einem ihm zugeordneten Übertragungsnetz durch Registrierung an oder bleibt registriert sofern es dies schon war. Stellt ein Endgerät fest, dass die dem anderen Endgerät zugeordnete Priorität höher als die eigene ist, dann meldet es sich in einem ihm zugeordneten Übertragungsnetz ab, sofern es durch Registrierung angemeldet war. Die Übertragungsnetze beider Endgeräte können gleich oder verschieden sein. Beim Umschaltvorgang der Registrierung des einen und der Ent-Registrierung des anderen Endgerätes kann die gleiche Registriernummer oder es können unterschiedliche Registriernummern verwendet werden. Vorteilhaft wirkt sich aus, wenn stets dieselbe Registriernummer verwendet wird, beispielsweise in einem UMTS-Handy, das ein Teilnehmer mit sich führt und bei einer Autofahrt automatisch das UMTS-Autotelefon des Teilnehmers automatisch aktiviert wird und im UMTS-Netz mit derselben Registriernummer registriert ist wie das UMTS-Handy, das während der Autofahrt aus dem UMTS-Netz abgemeldet ist. Über eine Bluetooth-Verbindung zwischen UMTS-Handy und UMTS-Autotelefon können allerdings Features, Teilnehmer-Profile, Datenbanken, etc. des UMTS-Handys auf dem UMTS-Autotelefon zur Verfügung gestellt werden.

Im folgenden wird ein Ausführungsbeispiel der Erfindung unter Zuhilfenahme von einer Figur erläutert.

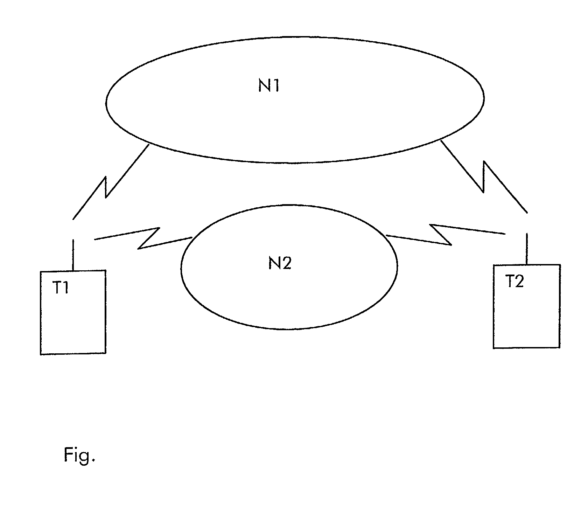

Die Figur zeigt eine schematische Darstellung eines erfindungsgemäßen Übertragungssystems.

Das Übertragungssystem beinhaltet ein erstes Übertragungsnetz N1, ein zweites Übertragungsnetz N2, ein erstes Endgerät T1 und ein zweites Endgerät T2.

Das erste Übertragungsnetz N1 ist beispielsweise ausgeführt als sogenanntes core network, als Funknetz, GSM, UMTS, GSM und UMTS, Betriebsfunk, etc.

Das zweite Übertragungsnetz N2 ist beispielsweise ausgeführt als Bluetooth Netz, HiperLan2, wireless LAN 8002.11, wireless LAN 8002.11, Infrarot-Netz, Ultraschall-Netz oder ein anderes Übertragungsmedium.

Das erste Endgerät T1 ist beispielsweise ausgeführt als Funktelefon, Mobilfunktelefon, GSM-Handy, UMTS-Handy, etc.

Das zweite Endgerät T2 ist beispielsweise ausgeführt als Funktelefon, Mobilfunktelefon, GSM-Handy, UMTS-Handy, Autotelefon, leitungsgebundenes Endgerät etc.

Beide Endgeräte T1, T2 gehören beispielsweise einem Teilnehmer. Der Teilnehmer steigt mit seinem als GSM-Handy ausgeführten Endgerät T1 in sein Auto, in dem sein als GSM-Autotelefon ausgeführtes Endgerät T2 installiert ist. Endgerät T1 ist im Übertragungsnetz N1, das beispielsweise als GSM-Netz ausgeführt ist, registriert. Endgerät T2 ist noch nicht registriert. Über das z.B. als Bluetooth ausgeführte Übertragungsnetz N2 erkennen beide Endgeräte einander. Die Erkennung erfolgt automatisch, wenn beide Endgeräte T1, T2 in Bluetooth-Reichweite kommen und z.B. durch eine im Endgerät T1 abgespeicherte Endgeräte- oder Identifikationsnummer von Endgerät T2 und durch eine im Endgerät T2 abgespeicherte Endgeräte- oder Identifikationsnummer von Endgerät T1. Durch eine Voreinstellung bei beiden Endgeräten T1, T2 wird nun Endgerät T2 anstelle von Endgerät T1 im Übertragungsnetz N1 automatisch registriert, womit folgende Anrufe stets auf Endgerät T2 weitergeleitet werden. Ohne Zutun des Teilnehmers ist nun Endgerät T2 registriert, was dem Teilnehmer während der Autofahrt den Vorteil der höheren Sprachqualität des Autotelefons, der Nutzung der Freisprechanlage des Autotelefons, etc. bringt, ohne dass der Teilnehmer dies aktiv und umständlich veranlassen muss. Durch diesen neuen Dienst wird der Einsatz von Mobilfunktelefonen komfortabler. Bei Verlassen des Autos wird erkannt, dass die Bluetooth-Verbindung zwischen den Endgeräten T1, T2 unterbrochen ist, was zur Folge hat, dass sich Endgerät T2 automatisch abmeldet und Endgerät T1 sich neu registriert, wodurch im folgenden wieder alle Anrufe automatisch an Endgerät T1 weitergeleitet werden. Auch dies geschieht ohne Zutun des Teilnehmers, so dass auch hier für den Teilnehmer maximaler Komfort angeboten werden kann.

Übertragungsnetz N1 kann auch aus zwei oder mehr anstelle von einem Netz bestehen, beispielsweise aus einem GSM-Netz und einem leitungsgebundenen Vermittlungsnetz. Der Teilnehmer hat beispielsweise ein als GSM-Handy ausgeführtes Endgerät T1 und ein als DECT-Telefon oder DECT-Basisstation ausgeführtes Endgerät T2. Beide Endgeräte weisen eine Bluetooth-Antenne auf zwecks Ermöglichung der internen Kommunikation über Übertragungsnetz N2. Das DECT-Telefon befindet sich im Haus des Teilnehmers. Befindet sich der Teilnehmer außerhalb des Hauses und außerhalb der Reichweite von Bluetooth, so ist sein Endgerät T1 aktiviert, d.h. er ist im GSM-Netz registriert. Befindet der Teilnehmer sich innerhalb des Hauses, so kommunizieren die Endgeräte T1 und T2 über Bluetooth automatisch miteinander, erkennen sich und leitet eine Umschaltung ein. Endgerät T2 wird über die DECT-Basisstation im leitungsgebundenen Vermittlungsnetz registriert, sofern es nicht bereits schon registriert ist, und Endgerät T1 wird abgemeldet. Alle neuen Anrufe werden dann automatisch zum DECT-Telefon weitergeleitet. Der Teilnehmer hat den Vorteil der besseren Sprachqualität des DECT-Telefons und der geringeren Gebühren. Verlässt der Teilnehmer das Haus mit seinem GSM-Handy, so wird dieses wieder registriert. Das DECT-Telefon bleibt wahlweise registriert oder wird abgemeldet. Das DECT-Telefon kann beispielsweise entsprechend programmiert werden. Bei einem Single wird es bevorzugt abgeschaltet, bei einer Familie bevorzugt weiterhin registriert damit die übrigen, sich im Haus befindlichen Familienmitglieder weiterhin telefonieren können.

Ebenso sind Beispiele mit zwei UMTS-Endgeräten, einem GSM-Endgerät und einem UMTS-Endgerät, einem UMTS-Endgerät, einem UMTS-Autotelefon und einem DECT-Endgerät aufzeigbar.

Wichtig ist die interne Kommunikationsmöglichkeit der Endgeräte und die Möglichkeit des Erkennens des oder der anderen Endgeräte.

Bei einer Ausgestaltung der Erfindung kann das Teilnehmerprofil jeweils auf das aktuelle Endgerät zur Verfügung gestellt werden. Das Teilnehmer Profil ist beispielsweise gespeichert auf einer SIM-Karte des Teilnehmers. Die SIM-Karte ist z.B. in Endgerät T1 eingesteckt. Nach der Registrierung von Endgerät T2 hat Endgerät T2 beispielsweise Zugriff auf die auf der SIM-Karte abgespeicherten Daten und damit auf das Teilnehmer Profil, beinhaltend beispielsweise eine Telefonliste, einen Terminkalender, etc. Der Zugriff kann z.B. erfolgen durch Kopieren der Daten und Übertragen über Bluetooth zu Endgerät T2. Die Übertragung erfolgt beispielsweise verschlüsselt. Oder der Zugriff erfolgt in der Weise, dass die Daten auf die zugegriffen werden soll lediglich auf Endgerät T2 dargestellt werden, d.h. gespiegelt werden, die Operation, Auswahl, etc. allerdings weiterhin auf Endgerät T1 ausgeführt wird. Endgerät T2 beinhaltet beispielsweise keine SIM-Karte, d.h. jegliche Operation wird weiterhin durch Endgerät T1 unter Zuhilfenahme von Bluetooth durchgeführt, oder eine SIM-Karte, z.B. eine twin SIM-Karte und alle oder Teile der Operationen werden durch Endgerät T2 selbst durchgeführt. Der download von Daten von SIM-Karte des Endgeräts T1 auf SIM-Karte des Endgeräts T2 wird nach Deaktivierung von Endgerät T2 wieder gelöscht zwecks Verhinderung von unerlaubtem Zugriff.

Anstelle von Bluetooth können beispielsweise auch Infrarot, Ultraschall oder andere Übertragungsmedien verwendet werden.

Die Endgeräte können derart programmiert sein, dass der neue, erfindungsgemäße Dienst des prioritätsbezogenen Registrierens und Abmeldens abschaltbar und einschaltbar ist. Der Teilnehmer kann dann wählen, ob er diesen Dienst in Anspruch nehmen möchte oder nicht. Will ein Teilnehmer den Dienst stets in Anspruch nehmen, so wird er seine Endgeräte oder eine Auswahl daraus derart programmieren, dass diese dauerhaft den Dienst aktiv geschaltet haben und somit eine Umschaltung auf das Endgerät mit der höheren Priorität automatisch erfolgt, sobald sich zwei Endgeräte in die Reichweite des zweiten Übertragungsnetzes geraten. Ferner können die Endgeräte derart programmiert werden, dass eine Abmeldung aus einem Übertragungsnetz während der Dauer eines Telefongespräches nicht möglich ist. Dies soll beispielsweise verhindern, dass ein telefonierender Teilnehmer, der sich seinem Auto nähert eine Unterbrechung seiner Verbindung in Kauf nehmen muss oder eine Umschaltung auf sein Autotelefon erfolgt, obwohl der Teilnehmer sich noch nicht im Auto befindet.

## Patentansprüche

1. Verfahren zur Auswahl eines von mindestens zwei Endgeräten (T1, T2), wobei jedes Endgerät (T1, T2) eine Schnittstelle zu einem ersten (N1) und einem zweiten (N2) Übertragungsnetz aufweist und das zweite Übertragungsnetz (N2) eine direkte, räumlich begrenzte Verbindung zwischen zwei Endgeräten (T1, T2) ermöglicht, **dadurch gekennzeichnet, dass** zwei Endgeräte (T1, T2) sich über das zweite Übertragungsnetz (N2) identifizieren und selbständig über eine Registrierung im ersten Übertragungsnetz (N1) entscheiden und eine Registrierung oder eine Abmeldung veranlassen.

2. Verfahren nach Anspruch 1, **dadurch gekennzeichnet, dass** das erste Übertragungsnetz (N1) ein oder zwei Netze beinhaltet, dass das erste Übertragungsnetz (N1) ein GSM-Netz, UMTS-Netz, DECT-Netz und/oder leitungsgebundenes Vermittlungsnetz aufweist, dass das zweite Übertragungsnetz (N2) ein Bluetooth-Netz aufweist, dass ein Endgerät (T1) als GSM-Endgerät mit Bluetooth-Schnittstelle, als UMTS-Endgerät mit Bluetooth-Schnittstelle, als DECT-Endgerät mit Bluetooth-Schnittstelle oder als leitungsgebundenes Endgerät mit Bluetooth-Schnittstelle ausgeführt ist und ein anderes Endgerät (T2) als GSM-Endgerät mit Bluetooth-Schnittstelle, als UMTS-Endgerät mit Bluetooth-Schnittstelle, als DECT-Endgerät mit Bluetooth-Schnittstelle oder als leitungsgebundenes Endgerät mit Bluetooth-Schnittstelle ausgeführt ist.

3. Übertragungssystem beinhaltend ein erstes Übertragungsnetz (N1), ein zweites Übertragungsnetz (N2), ein erstes Endgerät (T1) mit einer Schnittstelle zum ersten (N1) und einer Schnittstelle zum zweiten (N2) Übertragungsnetz und ein zweites Endgerät (T2) mit einer Schnittstelle zum ersten (N1) und einer Schnittstelle zum zweiten (N2) Übertragungsnetz, **dadurch gekennzeichnet, dass** die beiden Endgeräte (T1, T2) geeignet sind, sich über das zweite Übertragungsnetz (N2) zu identifizieren und jeweils selbständig über eine Registrierung im ersten Übertragungsnetz (N1) zu entscheiden und eine Registrierung oder eine Abmeldung zu veranlassen.

4. Endgerät (T1) mit einer Schnittstelle zu einem ersten Übertragungsnetz (N1) und einer Schnittstelle zu einem zweiten Übertragungsnetz (N2), **dadurch gekennzeichnet, dass** das Endgerät (T1) geeignet ist, eine Registrierung im ersten Übertragungsnetz (N1) zu veranlassen, dass das Endgerät (T1) geeignet ist, Signale eines zweiten Endgerätes (T2) über das zweite Übertragungsnetz (N2) zu empfangen, auszuwerten und bei einer Identifikation des zweiten Endgerätes (T2) als Endgerät mit einer höheren Priorität selbständig über eine Abmeldung aus dem ersten Übertragungsnetz (N1) zu entscheiden und diese bei einer positiven Entscheidung zu veranlassen.

5. Endgerät (T2) mit einer Schnittstelle zu einem ersten Übertragungsnetz (N1) und einer Schnittstelle zu einem zweiten Übertragungsnetz (N2), **dadurch gekennzeichnet, dass** das Endgerät (T2) geeignet ist, Signale eines zweiten Endgerätes (T1) über das zweite Übertragungsnetz (N2) zu empfangen, auszuwerten und bei einer Identifikation des zweiten Endgerätes (T1) als registriertes Endgerät mit einer niedrigeren Priorität selbständig über eine Registrierung im ersten Übertragungsnetz (N1) zu entscheiden und diese bei einer positiven Entscheidung zu veranlassen.

6. Endgerät (T2) nach Anspruch 5, **dadurch gekennzeichnet, dass** das Endgerät (T2) geeignet ist, die Registriernummer unter der das zweite Endgerät (T1) im ersten Übertragungsnetz registriert ist, vom zweiten Endgerät (T1) anzufordern oder einen Speicher aufweist, in dem die Registriernummer abgespeichert ist, und sich selbst unter dieser Registriernummer im ersten Übertragungsnetz (N1) anzumelden.
